# EUROPEAN PATENT SPECIFICATION

(11) **EP 0 536 221 B1**
(45) Date of publication and mention of the grant of the patent: **28.08.1996**
(21) Application number: 91911852.1
(22) Date of filing: 25.06.1991
(51) Int. Cl.: A61C 7/12

(54) **SYSTEM OF TREATMENT FOR USE IN FUNCTIONAL ORTHODONTICS**
BEHANDLUNGSSYSTEM ZUR ANWENDUNG IN DER FUNKTIONALEN ORTHODONTIE
SYSTEME DE TRAITEMENT DESTINE A ETRE UTILISE EN ORTHODONTIE FONCTIONNELLE

(30) Priority: 26.06.1990 DE 4020315
(43) Date of publication of application: 14.04.1993
(73) Proprietor: RISSE, Georg, D-48143 Münster (DE)
(72) Inventor: RISSE, Georg, D-48143 Münster (DE)
(74) Representative: VOSSIUS & PARTNER
(86) International application number: EP9101186
(87) International publication number: WO9200041

(56) References cited:
- US-A- 4 676 746
- US-A- 4 793 804
- US-A- 4 818 226

## Description

The invention relates to a rectangular orthodontic wire for use as archwire in combination with a bracket or band for use in orthodontics. The invention also relates to a set comprising such archwires and brackets or bands.

The treatment of the position of the teeth and the treatment of the position of the upper and lower jaw is generally possible by orthopedic and orthodontic means.

The orthopedic treatment or functional orthopedics has mainly been used in Europe. The appliances used in orthopedics are removable. They therefore produce forces on the teeth mainly intermittently and react as growth stimulators intermaxillary and intramaxillary. The exact positioning of teeth is, however, not possible because there are only point contacts between appliances and teeth.

The orthodontic treatment is characterized by its fixed appliances. The forces applied by fixed appliances react on the teeth in all three dimensions at the same time. The position of the upper jaw and its teeth in relation to the lower jaw and its teeth is handled by additional intermaxillar and extraoral appliances, like elastics and headgear or facebow. In stimulating growth and growth direction of jaws, muscles, habits and teeth, fixed appliances seem to be in different situations less effective than removable appliances, but are highly superior in the detailed positioning of teeth in their special function.

The vast majority of all cases represents a combination of growth problems, like position of the jaws, and wrong positioned teeth in the upper and lower jaw. Therefore a combined therapy with both appliances, using primarily removable appliances and in particular for dental anomalies with rest growth problems fixed appliances, is indicated.

Historically functional orthopedics in its narrow sense has been developed in Europe and comprises essentially removable appliances only, whereas orthodontics has been predominantly developed in the U.S.A. and comprises mainly fixed appliances.

Functional orthopedics with its removable appliances works mostly with inductive, so-called functional forces with functional reaction on bones, teeth, muscles, parodontium and growth centers, whereas the orthodontic treatment with its fixed appliances usually influences biological structures mechanically.

The fixed appliances consist mainly of two basic units. The one part, namely the bracket or band, is firmly fixed on each tooth and contains a slot with a specific cross-section. The other part, namely the archwire, is fixed into the slot and combines all teeth of a jaw. The bands originally consisted of metal rings onto which attachments with slots were welded. Brackets are essentially only these attachments without the band or ring, and are directly fixed on each tooth by adhesive materials.

By using a rectangular slot in the brackets, which are fixed on the teeth with a fixed rectangular wire in the rectangular slot, the effect of the force is acting three-dimensionally. The individual teeth can be influenced in their height, in their angulation, and in their axial inclination.

The brackets have to be placed extremely accurately in height and angulation to prevent unwanted extrusions or angulations of the different teeth when a straight wire is ligated. The third dimension providing a torque acting on a tooth is applied differently in the different techniques. The displacement of the acial inclination of a tooth can either be provided by a torsion in the wire or, if straight wires are used, by an adequate inclination of the slot in the bracket.

The different techniques in orthodontics differ mainly in different angulations and torques in the slots of the brackets. When using a straight wire without torsion, the final axial position of the tooth is essentially predetermined by the angular position of the slot in the bracket. The most famous techniques are the "Jaraback"-, "Rickets"-, "Alexander"-, "Hilgers"- and "Roth"-Technique. A survey of the different techniques is to be found for example in the handbook "Handbuch für die kieferorthopädische Praxis, Band II, des Berufsverbandes Deutscher Kieferorthopäden 1988".

All these orthodontic techniques have in common both a rectangular slot and a rectangular archwire. With the exception of the Roth technique, a slot of 0.018 x 0.022 inches (0.457 x 0.559 mm) is used, and rectangular wires having a size of 0.016 x 0.016 inches (0.406 x 0.406 mm), 0.016 x 0.022 inches (0.406 x 0.559 mm), 0.017 x 0.022 inches (0.432 x 0.559 mm) and 0.018 x 0.022 inches (0.457 x 0.559 mm). In the Roth technique, a slot with a size of 0.022 x 0.025 inches (0.559 x 0.635 mm) and archwires up to this size are used. Note that all commercial archwire cross-sections are given in inch or 1/1000 inch; 1 inch = 25.4 mm.

To reduce the enormous forces from one tooth to the other, there were used so-called multiloop arches particularly in the initial levelling phase of the Jaraback technique. In putting more wire, namely a loop, inbetween the distance from one tooth to another the amount of force can be reduced. The disadvantages of this multiloop technique are the following: It is extremely difficult to bend a wire, to activate the wire, and to control the forces on the teeth and their movement, and it takes a great deal of time to obtain its shape, which a patient often will not accept. Additionally these loops may injure the soft tissue directly, and tooth brushing is hardly possible with the consequence of following damage to the teeth by various decalcifications and inflammations of the soft tissues of the parodontium.

In order to avoid all these disadvantages different and more elastic wires made of new alloys were developed in order to allow the handling of the teeth with straight wires which are not broken by a loop. The problem to avoid the high forces has been tried to be solved by higher elasticity and lower stiffness of the alloys.

However, the main problem in handling these wires is, surprisingly, their elasticity, because it is more or less impossible to bend any individual demand into these wires. i.e. to bend the known wires in such a way that the individual requirements are fulfilled. Therefore they are useful only for a very short treatment period or for some abnormal situations.

In addition the span, the distance from tooth to tooth, has a very small biological variability. This means that even if the elasticity of a wire may be extremely high, every elastic wire with a cross-section of 0.016 x 0.022 inches (0.406 x 0.559 mm), 0.017 x 0.022 inches (0.432 x 0.559 mm), 0.018 x 0.022 inches (0.457 x 0.559 mm) or even 0.016 x 0.016 inches (0.406 x 0.406 mm), which are the common wire sizes, in a slot of 0.018 x 0.022 inches (0.457 x 0.559 mm) separated by a span of approximately 4 to 6 mm (0.16 to 0.24 inches) will still cause enormous forces. These forces which are directly influenced by the physical requirements of the size of the wire and the span are not sufficiently controllable or adjustable and are not within biological limits.

In numerous articles damage and problems with too high forces are described. They range from root resorptions, damage to the parodontium, necrosis by lack of blood supply and resulting loss of tooth movements (ankylosis), up to the failure of handling a case because too high a force moment very often does not cause the required intrusion in the front but rather an extrusion of the molars by bigger rotation moments or torques for example. A mismanagement in this way may cause temporomandibular joint problems and muscle diseases with headache. The generally accepted biological demands in this field are e.g. described in the articles of Kaare Reitan, D.D.S., U.S.D., Ph.D., e.g. in the treatise "Biomechanische Prinzipien der Gewebsreaktion" in "Grundlagen und moderne Techniken der Kieferorthopädie", pages 149 to 279, and by other scientists.

A summary of these ideas is to be found in the book "Current Principles and Techniques" by T.M. Graber/B.F. Swain.

The required forces should work simultaneously in three dimensions, be controllable as to the wanted direction and amount of movement and cause less damage to biological tissue. This cannot be achieved in the common systems, even not by means of the more elastic wire alloys discussed above. While round wires with smaller diameters, which consequently cause weaker forces, are available, these round wires do not work three-dimensionally and are thus useful only for the initial levelling period.

US-A-4 793 804 relates to an orthodontic bracket for use in combination with archwires in edgewise appliances. The bracket according to US-A-4 793 804 comprises a channel for receiving said archwire, at least one of the sidewalls of said channel being of stepped configuration so that said channel defines at least two adjacent slots of different widths. The purpose of said stepped configuration of the channel is to receive an archwire within the large slot in a loose fit and within the small slot in a precision fit. In the finishing treatment, US-A-4 793 804 aims at a precision fit between the archwire and the bracket slot at all teeth. US-A-4 793 804 discloses both large and small archwires with a cross-section of 0.022 x 0.028 inches (0.559 x 0.701 mm) and 0.014 x 0.018 inches (0.356 x 0.457 mm), wherein a small wire with a cross-section of 0.014 x 0.018 inches (0.356 x 0.457 mm), 0.015 x 0.019 inches (0.381 x 0.482 mm) and 0.016 x 0.022 inches (0.406 x 0.559 mm) can be accommodated in the bracket both in a tight fit mode and in a loose fit mode.

US-A-4 818 226 relates to an orthodontic archwire of unitary memory retaining wire for repositioning teeth en masse, the archwire comprising first, second and third curved sections. According to US-A-4 818 226, rectangular wires used for retraction of teeth can have the following dimensions: 0.016 x 0.022 inches (0.406 x 0.559 mm) and 0.017 x 0.025 inches (0.435 x 0.635 mm) for 0.018 inch (0.457 mm) slot appliances, and 0.019 x 0.025 inches (0.482 x 0.635 mm) and 0.021 x 0.025 inches (0.533 mm x 0.635 mm) for 0.022 inch (0.559 mm) slot appliances.

The object of this invention is to provide a combination of orthodontic wire and bracket or band, which combination introduces the advantages of functional treatment philosophies like low inductive and adaptable forces into fixed appliance treatment techniques and avoids the disadvantages of both techniques.

This object is achieved by the invention according to the claims.

The idea underlying the present invention is to use a controlled and low amount of applied force by using smaller rectangular wires with high flexibility in the bracket slot. According to the invention, the short edges of the wires are not longer than 0.015 inches (0.381 mm) and the long edges are not longer than 0.020 inches (0.508 mm).

The rectangular archwires according to the invention have the following essential advantages vis-à-vis the conventional thicker wires:

The patient realizes considerably less pain.

The wires according to the invention are effective for a considerably longer period of time, as due to their small cross-section they have more play in the slot of the brackets or bands.

They act like springs although they have the shape of a straight wire, so they are suitable for all treatment periods and for all relations of teeth positions. As they act like springs and as their shape is more or less a straight unbroken wire just from the beginning, a very accurate and quick treatment is possible. When using a stainless steel alloy or similar alloys for the wires according to the invention individual gables and angulations are possible.

Multiloop arches with a rectangular shape, low cross-sections and a high flexibility in the slots are also possible with the wires and brackets or bands according to the invention and are highly effective.

The wires according to the invention provide better elasticity since the elasticity of a wire is increasing proportionally by reducing the cross-section inbetween a distinct and predetermined distance. With the wire and bracket or band according to the invention, a displacement of the axial inclination of an individual tooth can be provided individually and more precisely by the orthondotist via a torsion of the wire. Such a torque cannot be provided by wires made of the more elastic alloys mentioned above, irrespective of their sizes.

Summing up, a very individual treatment in relation to anomaly and biology and a reduction in treatment time is possible with the wires and brackets or bands according to the invention because movements of teeth start just from the very beginning in the right direction in all three dimensions, supported by biological forces, and damage and pain are reduced.

Contrary to the archwires conventionally used, which usually must act with too strong forces for a short time period with less blood supply or even loss of blood supply, the present invention avoids these problems and makes it possible to apply forces for a longer period of time and to keep them biologically acceptable.

The three-dimensional impulse caused by the wire works as a guide for the root movement, e.g. as a "flowing" of the roots in the spongeous alveolar bed so that the individual control which is necessary for each patient is guaranteed. The apex of the roots does not grind at the compacta continually which is often the case in conventional techniques, as with the wires and brackets or bands according to the invention the roots have the possibility by means of the impulses and by means of a great range of freedom in space to go back into the soft part of the spongiosa of the alveolar bone.

The present invention reduces root resorptions of the teeth by a very high percentage and causes additionally much quicker movement of the teeth with a reduction of treatment time.

The reduction of forces causes a much better handling of movement directions especially in handling extrusions and intrusions of anterior or posterior teeth, which is essential in handling e.g. open bites.

With the wires and brackets or bands according to the present invention cases can be handled successfully in which conventional treatment would fail or in which the treatment time would be much longer than necessary, and root resorptions are avoided.

As the blood supply is not squeezed off or affected with the present invention, bone remodelling activities are much quicker, necroses and root resorptions and parodontal damage can be avoided or considerably reduced.

In summary, when using the wires and brackets or bands according to the invention it is possible to achieve treatment results faster, more easily and better, causing less pain and damage to the patient than with the conventional system.

The wires according to the invention can be made from any material, especially any alloys conventionally used for archwires.

According to another aspect of the invention, the dimensions of the slot receiving the archwire in the bracket or band are suitably selected with respect to the dimensions of the wire, thus allowing a finer adjustability in particular for the final phase of the treatment. For the sake of convenience, in the following the term "bracket" is used, it should, however, be noted that this term when used in this specification comprises both brackets and bands.

The brackets according to the invention comprise rectangular slots the short sides of which are 0.018 inch (0.457 mm) or shorter, and the long sides of which are 0.022 inch (0.559 mm) or shorter.

According to yet another aspect of the invention a set comprises at least one rectangular archwire wherein the two shorter edges of the wire are not longer than 0.015 inches (0.381 mm) and the two longer edges of the wire are not longer than 0.020 inches (0.508 mm), and at least one bracket or band having a rectangular slot for receiving said archwire wherein the shorter sides of the cross-section of the slot are 0.018 inches (0.457 mm) or shorter, and the longer sides of the cross-section are 0.022 inches (0.559 mm) or shorter. The above set is useful in an orthodontic method for the treatment of faulty positions of teeth.

The set according to the invention and the orthodontic method in which it is used can be described by the term "functional orthodontics", since they combine the advantages of the above described functional dental orthopedics, which uses intermittent functional treatment by means of removable appliances, with the advantages of orthodontics, which uses a more mechanical way of influence on the teeth. In accordance with the invention selective controlled forces are used which can be obtained neither by the known small round archwires alone nor by the known stiff rectangular archwires. With the wires and brackets and the set according to the invention intermittently acting forces can be applied, which so far were observed only in functional dental orthopedics. In contrast to functional dental orthopedics, in the present invention intermittent forces may also be applied three-dimensionally, whereby a selective three-dimensional tooth movement is made possible. In connection with the clearly reduced forces, the present invention provides a link between traditional orthodontics and functional therapy. By a suitable choice of the archwire cross-section and adjustment of the cross-sections of the wires and corresponding slots in such a way that the wires have sufficient play in the slots, in particular by the intermittently applied impulses of force, a more gentle, speedy and selective treatment of the patient is made possible.

In contrast to the conventional treatment concepts with fixed appliances which follow the demand for "full engagement philosophy" of wire and slot, the functional orthodontic treatment method provides freedom of movement of the wire in the slot to a high extent. Thus the functional orthodontic treatment method relates to the biological demands and makes it possible to handle them. The present invention provides both a new combination of wires and brackets or bands as well as a new way of interaction between wires and brackets.

Since, according to the invention, the applied forces are different from conventional systems in terms of their impulse, magnitude and type, the biological reactions are different. This is comparable to the case of different chemical compounds which also cause different reactions of the human body.

According to the present invention, the archwires preferably have cross-sections of 0.009 x 0.018, 0.010 x 0.018, 0.011 x 0.018, 0.012 x 0.018, 0.013 x 0.018, 0.014 x 0.018, 0.015 x 0.018 inches or 0.009 x 0.020, 0.010 x 0.020, 0.011 x 0.020, 0.012 x 0.020, 0.013 x 0.020, 0.014 x 0.020 and 0.015 x 0.020 inches (0.229 x 0.457, 0.254 x 0.457, 0.279 x 0.457, 0.305 x 0.457, 0.330 x 0.457, 0.356 x 0.457, 0.381 x 0.457 mm or 0.229 x 0.508, 0.254 x 0.508, 0.279 x 0.508, 0.305 x 0.508, 0.330 x 0.508, 0.356 x 0.508 and 0.381 x 0.508 mm). Any intermediate sizes are also within the scope of the invention, like e.g. wires with long edges of 0.019 inches (0.482 mm), in combination with the above mentioned sizes of the short edges. It is also within the scope of the present invention to have archwires in which the shorter edge of their cross-section is shorter than 0.009 inch (0.229 mm), namely 0.005 inch (0.127 mm), 0.006 inch (0.152 mm), 0.007 inch (0.178 mm) or 0.008 inch (0.203 mm), for specific purposes. The long edge of these archwires is preferably 0.020 inch (0.508 mm) or less.

It has been found that for example a rectangular heat-treated stainless steel wire having a cross-section of 0.010 x 0.020 inches (0.254 x 0.508 mm) has all desired characteristics such as hardness, bending strength and resilience and thus the optimum force required for bending. During bending such a wire can be drawn optimally through the so-called "bending finger". For example, a wire with a thickness of 0.010 x 0.020 inches (0.254 x 0.508 mm) has a cross-section which is more than 40% smaller than the cross-section of conventional wires having a thickness of 0.016 x 0.022 inches (0.406 x 0.559 mm) and thus has a correspondingly reduced bending strength and force required for bending. Wires with a thickness of 0.010 x 0.020 inches (0.254 x 0.508 mm), 0.011 x 0.020 inches (0.279 x 0.508 mm) and 0.012 x 0.020 inches (0.305 x 0.508 mm) can be used e.g. for the controlled intrusion of the front teeth (incision). At the same time they allow good buco-lingual control of the molars with simultaneous easy levelling processes. For this purpose, wires with an even smaller cross-section having a shorter edge of 0.005 to 0.009 inch (0.127 to 0.229 mm) may be used. Wires with a thickness of 0.014 x 0.020 inches (0.356 x 0.508 mm) and 0.015 x 0.020 inches (0.381 x 0.508 mm) may for example be used as level arches with torque control and as working arches, such as final and ideal arches.

Essentially all conventional archwire alloys may be used as wire material, such as those traded by Ormco Corporation, Glendora, California, U.S.A., cf. their brochure "The right wire for every phase of treatment", Print No. 070-5011, 1987.

Preferably stainless steel wires are used, which are heat-treated, e.g. by means of a flame, after bending. By this heat-treatment an additional resilience can be obtained.

The preferred size of the slot in the brackets is 0.016 x 0.022 inches (0.406 x 0.559 mm) or 0.017 x 0.022 inches (0.432 x 0.559 mm).

With thin wires, slots having a cross-section of 0.017 x 0.020 inches (0.432 x 0.508 mm), 0.017 x 0.019 inches (0.432 x 0.482 mm), 0.016 x 0.020 inches (0.406 x 0.508 mm) and 0.016 x 0.019 inches (0.406 x 0.482 mm) may also be used. Wires having short edges being shorter than 0.010 inch (0.254 mm) are preferably used in connection with slots having short sides with a length of 0.016 inch (0.406 mm) or less.

A wire with a cross-section of 0.010 x 0.020 inches (0.254 x 0.508 mm) in a slot having a cross-section with a short side of 0.016 or 0.017 inches (0.406 or 0.432 mm) and a long side of 0.020 to 0.022 inches (0.508 to 0.559 mm) has enough play to allow a controlled biologically acceptable three-dimensional force. According to the invention, the play of the wire in the slot in the direction of the short edge is at least 0.003 inches (0.076 mm) and up to 0.012 inches (0.305 mm), preferably up to 0.007 inches (0.178 mm), whereas in conventional systems with wires of 0.016 x 0.022 inches (0.406 x 0.559 mm) and slots of 0.018 x 0.022 inches (0.457 x 0.559 mm) it is only up to a maximum of 0.002 inches (0.051 mm).

The slots which are smaller vis-à-vis conventional techniques moreover have the advantage that the bracket is flatter and thus more pleasant for the lip or cheek of the patient.

Besides the sizes of the archwires and slots explicitly mentioned above, wires and slots of any intermediate sizes are also within the scope of the invention and the sizes need not be in steps of one thousandth of an inch.

In a combination or set consisting of the above described wires and brackets, the angulations of the above described conventional techniques are also adjustable.

In conventional systems, the bracket is firmly connected to its base. According to the invention, the bracket may also be firmly fixed on its base, e.g. welded or soldered to the base. Alternatively, in a preferred embodiment of the invention the bracket may be slidably mounted on its base. When the bracket is slidably mounted, it has the advantage that the brackets may be exchanged any time and even in partial sections and the cross-sections of the slots may be adapted to the respective treatment situation without the need to remove the base of the brackets, and without damaging the teeth by a new conditioning and glue phase. Moreover, by means of the slidable mounting of the bracket onto its base, the duration of the treatment is considerably shortened and thus the costs reduced.

In view of the fact that brackets with different slot thicknesses and slot cross-sections can be quickly and easily exchanged with each other, the orthodontist is given a large variety of possible applications of smaller, intermittently acting forces in the initial phase of the treatment.

It is particularly advantageous when the adjustment of the slidable bracket on the base can be varied in its height and rotation as well as its tilt. It is thus possible to correct positioning errors of the bracket base on the tooth by a suitable shift of the slidable bracket on its base. Thus, treatment errors can be eliminated or at least corrected.

The vertically and rotatably adjustable mounting of the bracket on its base can be carried out in practice in any way known to the person skilled in the art.

In the following a typical treatment example will be described in order to demonstrate the practical value of the invention.

## Claims

1. Rectangular orthodontic wire for use as an archwire, wherein the two short edges of the wire are not longer than 0.381 mm (0.015 inches) and the two long edges of the wire are not longer than 0.508 mm (0.020 inches) in combination with a bracket or band having a single rectangular slot smaller than 0.457 x 0.559 mm (0.018 x 0.022 inches) in cross-section, with the provision that when the wire is assembled in the bracket or band the play of the wire in the slot in the direction of the short edge is at least 0.076 mm (0.003 inches).

2. Orthodontic wire and bracket or band according to claim 1, wherein the two short edges of the wire have a length of 0.127 mm (0.005 inches) to 0.381 mm (0.015 inches).

3. Orthodontic wire and bracket or band according to claim 2, wherein the two short edges of the wire have a length of 0.254 mm (0.010 inches) to 0.381 mm (0.015 inches).

4. Orthodontic wire and bracket or band according to any of claims 1 to 3, wherein the wire is made of heat-treated steel or is heat-treated after having been brought into its desired shape.

5. Orthodontic wire and bracket or band according to any of claims 1 to 4, wherein the wire consists of an alloy conventionally used for orthodontic wires.

6. Orthodontic wire and bracket or band according to any of claims 1 to 5, wherein the shorter sides of the cross-section of the slot have a length of 0.406 mm (0.016 inches) or 0.432 mm (0.017 inches).

7. Orthodontic wire and bracket or band according to any of claims 1 to 6, wherein the longer sides of the cross-section of the slot have a length of 0.482 mm (0.019 inches) or 0.508 mm (0.020 inches).

8. Set of orthodontic wires and brackets or bands according to any of claims 1 to 7.

9. Set according to claim 8, wherein the cross-sections of the wires and the cross-sections of the slots of the brackets or bands are so adjusted that the wires have sufficient play in the slots to allow a selective three-dimensional application of force with biologically acceptable forces on the individual teeth.

10. Set according to claim 8 or 9, wherein the brackets are slidably arranged on a bracket base.

## Patentansprüche

1. Orthodontischer Vierkantdraht zur Verwendung als Bogen, wobei die zwei kurzen Kanten des Drahtes höchstens 0,381 mm (0,015 inch) und die zwei langen Kanten des Drahtes höchstens 0,508 mm (0,020 inch) lang sind, in Kombination mit einem Bracket oder Band, das einen einzigen rechteckigen Slot aufweist, dessen Querschnitt kleiner als 0,457 x 0,559 mm (0,018 x 0,022 inch) ist, mit der Maßgabe, daß, wenn der Draht in dem Bracket oder Band angeordnet ist, das Spiel des Drahtes in dem Slot in Richtung der kurzen Kante mindestens 0,076 mm (0,003 inch) beträgt.

2. Orthodontischer Draht und Bracket oder Band nach Anspruch 1, wobei die zwei kurzen Kanten des Drahtes eine Länge von 0,127 mm (0,005 inch) bis 0,381 mm (0,015 inch) aufweisen.

3. Orthodontischer Draht und Bracket oder Band nach Anspruch 2, wobei die zwei kurzen Kanten des Drahtes eine Länge von 0,254 mm (0,010 inch) bis 0,381 mm (0,015 inch) aufweisen.

4. Orthodontischer Draht und Bracket oder Band nach einem der Ansprüche 1 bis 3, wobei der Draht aus vergütetem Stahl besteht oder nach der gewünschten Formgebung vergütet wird.

5. Orthodontischer Draht und Bracket oder Band nach einem der Ansprüche 1 bis 4, wobei der Draht aus einer herkömmlich für orthodontische Drähte gebräuchlichen Legierung besteht.

6. Orthodontischer Draht und Bracket oder Band nach einem der Ansprüche 1 bis 5, wobei die kürzeren Seiten des Slotquerschnitts eine Länge von 0,406 mm (0,016 inch) oder 0,432 mm (0,017 inch) aufweisen.

7. Orthodontischer Draht und Bracket oder Band nach einem der Ansprüche 1 bis 6, wobei die längeren Seiten des Slotquerschnitts eine Länge von 0,482 mm (0,019 inch) oder 0,508 mm (0,020 inch) aufweisen.

8. Satz aus orthodontischen Drähten und Brackets oder Bändern nach einem der Ansprüche 1 bis 7.

9. Satz nach Anspruch 8, wobei die Drahtquerschnitte und die Slotquerschnitte der Brackets oder Bänder so aufeinander abgestimmt sind, daß die Drähte ausreichendes Spiel in den Slots aufweisen, um eine gezielte dreidimensionale Kraftanwendung mit biologisch verträglichen Kräften auf die einzelnen Zähne zu ermöglichen.

10. Satz nach Anspruch 8 oder 9, wobei die Brackets verschiebbar auf einer Bracketbasis angeordnet sind.

## Revendications

1. Fil orthodontique rectangulaire à utiliser comme fil d'arcade, dans lequel les deux bords courts du fil ne sont pas plus longs que 0,381 mm (0,015 pouce) et les deux bords longs du fil ne sont pas plus longs que 0,508 mm (0,020 pouce), en combinaison avec un crochet ou bande présentant une unique fente rectangulaire plus petite que 0,457 x 0,559 mm (0,018 x 0,022 pouce) en section transversale, à la condition que, lorsque le fil est assemblé dans le crochet ou bande, le jeu du fil dans la fente dans la direction du bord court soit d'au moins 0,076 mm (0,003 pouce).

2. Fil orthodontique et crochet ou bande suivant la revendication 1, caractérisés en ce que les deux bords courts du fil ont une longueur de 0,127 mm (0,005 pouce) à 0,381 mm (0,015 pouce).

3. Fil orthodontique et crochet ou bande suivant la revendication 2, caractérisés en ce que les deux bords courts du fil ont une longueur de 0,254 mm (0,010 pouce) à 0,381 mm (0,015 pouce).

4. Fil orthodontique et crochet ou bande suivant l'une quelconque des revendications 1 à 3, caractérisés en ce que le fil est fabriqué en acier traité à chaud ou est traité à chaud après avoir été amené dans sa forme souhaitée.

5. Fil orthodontique et crochet ou bande suivant l'une quelconque des revendications 1 à 4, caractérisés en ce que le fil est constitué d'un alliage habituellement utilisé pour des fils orthodontiques.

6. Fil orthodontique et crochet ou bande suivant l'une quelconque des revendications 1 à 5, caractérisés en ce que les côtés courts de la section transversale de la fente ont une longueur de 0,406 mm (0,016 pouce) ou de 0,432 mm (0,017 pouce).

7. Fil orthodontique et crochet ou bande suivant l'une quelconque des revendications 1 à 6, caractérisés en ce que les côtés longs de la section transversale de la fente ont une longueur de 0,482 mm (0,019 pouce) ou de 0,508 mm (0,020 pouce).

8. Jeu de fils orthodontiques et de crochets ou bandes suivant l'une quelconque des revendications 1 à 7.

9. Jeu suivant la revendication 8, caractérisé en ce que les sections transversales des fils et les sections transversales des fentes des crochets ou bandes sont ajustées de façon que les fils aient un jeu suffisant dans les fentes pour permettre une application de force tridimensionnelle sélective avec des forces biologiquement acceptables sur les dents individuelles.

10. Jeu suivant l'une des revendications 8 et 9, caractérisé en ce que les crochets sont agencés de manière à pouvoir coulisser sur une base de crochet.
